# EUROPÄISCHE PATENTANMELDUNG

(11) **EP 1 054 420 A1**
(43) Veröffentlichungstag der Anmeldung: **22.11.2000**
(21) Anmeldenummer: 99109787.4
(22) Anmeldetag: 18.05.1999
(51) Int. Cl.: H01H 13/70

(54) **Tastenfeld für ein elektrisches oder elektronisches Gerät sowie Verfahren zu dessen Herstellung**

(71) Anmelder: MOLEX INCORPORATED, Lisle Illinois 60532 (US)
(72) Erfinder: Rau, Michael, 74193 Schwaigern (DE); Röder, Jürgen, 64297 Darmstadt (DE)
(74) Vertreter: Blumbach, Kramer & Partner GbR

(57) **Zusammenfassung**

Damit bei einem Tastenfeld (1) für eine elektrisches oder elektronisches Gerät mit einem Tastenkörper (4), der innerhalb eines Tastenrahmens (6) gehalten ist, bei welchem der Tastenrahmen (6) und der Tastenkörper (4) aus einem relativ steifen Kunststoff bestehen, das Eindringen von Schmutz dauerhaft und mit hoher Sicherheit vermieden werden kann, ist vorgesehen, daß der Tastenkörper (4) seitlich mit einem elastischen Kunststoff (8) umgeben ist, welcher in den seitlichen Zwischenraum zwischen Tastenkörper (4) und Tastenrahmen (6) eingespritzt ist.

## Beschreibung

Die Erfindung betrifft ein Tastenfeld für ein elektrisches oder elektronisches Gerät sowie ein Verfahren zu dessen Herstellung.

Tastenfelder werden heutzutage bei einer Vielzahl verschiedener elektrischer oder elektronischer Geräte eingesetzt. Mit zunehmender Miniaturisierung elektrischer und elektronischer Baugruppen wurde es möglich, derartige Geräte klein und portabel zu gestalten, wie es beispielsweise bei schnurlosen oder GSM-Telefonen, Laptops oder Palmtops, digitalen Photo- und Videokameras oder auch handgehaltenen Satelliten-Navigationsempfängern der Fall ist. Diese Geräte unterliegen nicht nur einer stetig zunehmenden Verbreitung sondern werden auch einem immer breiter werdenden Anwendungsgebiet ausgesetzt. Es werden wichtige Vorgänge, wie beispielsweise eilige Telefonate, Absenden und Empfangen von elektronischen Nachrichten zu selbstverständlichen Vorgängen, die nahezu jederzeit und überall durchführbar sein sollen. Folglich kommt aber der Ausfallsicherheit sowie der Zuverlässigkeit dieser Geräte sehr hohe Bedeutung zu. Um die Schnittstelle zwischen Benutzer und Gerät, d.h. das Schaltverhalten einer Tastatur nicht negativ zu beeinflussen sowie die Funktionstüchtigkeit hochintegrierter Schaltungen mit extrem geringen Leiterbahnabständen nicht zu gefährden, ist die Verwendung von staub- und wasserdichten Gehäusen weithin verbreitet und stellt einen wichtigen Faktor für die dauerhafte Zuverlässigkeit dieser Geräte dar. Bisherige Lösungen waren jedoch nicht vollständig befriedigend.

Eine sowohl staub- als auch spritzwasserdicht ausgebildete Taste für ein in Tastrichtung bewegbares Schaltelement ist aus der DE 33 1226 A1 bekannt. Bei dieser speziellen Ausführungsform werden Schnappringe und radial hervorragende Rastnasen in aufwendiger Weise dazu verwendet, ein Dichtelement zwischen Taste und Tastenrahmen anzuordnen, wobei dieses Dichtelement nur mit mehreren mechanischen Befestigungsschritten anzubringen ist und darüber hinaus zumindest zwei Halteeinrichtungen benötigt, welche es zum einen an der Taste und zum anderen am Tastenrahmen eng anliegend halten. Bei dieser Ausführungsform ist äußerst nachteilig, daß seitliche Ränder des Dichtelementes von Schmutz und Feuchte unterkrochen werden können und bei Bewegung entstehende Spalte zwischen Dichtelement und Taste durch eingedrungenen Schmutz und Feuchte ein unansehnliches Äußeres bieten können.

Gemäß der US 5,362,934 wird vorgeschlagen, einen Tastenkörper mit einer Folie zu überziehen, wobei die Folie in einem seitlichen Randbereich des Tastenrahmens gehalten wird. Auch bei dieser Ausführungsform kommt es im seitlichen Randbereich bei der sandwichartigen Halterung der Folie bei Betätigung der Taste zu einer Verkippbewegung der Folie relativ zum Haltebereich, wodurch mit der Zeit Spalten gebildet werden, welche durch Eindringen von Verschmutzung und Feuchte unter Umständen ein Ablösen der Folie aus dem Randbereich bewirken können.

Der Erfindung liegt folglich die Aufgabe zugrunde, ein Tastenfeld für ein elektrisches oder elektronisches Gerät bereitzustellen, bei welchem das Eindringen von Schmutz dauerhaft und mit hoher Sicherheit vermieden werden kann und welches auf kostengünstige Weise herstellbar ist.

Diese Aufgabe wird auf höchst überraschend einfache Weise bereits durch ein Tastenfeld mit den Merkmalen des Anspruchs 1 sowie durch ein Verfahren mit den Merkmalen des Anspruchs 11 gelöst. Weitere vorteilhafte Ausgestaltungen sind beispielhaft in den Unteransprüchen aufgeführt.

Neben den nachfolgend noch detaillierter beschriebenen Vorteilen ist es mittels des eingespritzten elastischen Kunstoffs möglich, das Design des Tastenfeldes positiv zu unterstützen. Es ist möglich, den elastischen Kunststoff gleichfarbig, bzw. Ton-in-Ton mit dem Tastenrahmen zu gestalten oder mit einer bestimmten abweichenden Farbgebung bevorzugte visuelle Effekte zu erzeugen.

Eine dauerhaft zuverlässige fluiddichte Verbindung zwischen Tastenkörper und Tastenrahmen ergibt sich beispielsweise dadurch, daß der Tastenkörper seitlich mit einem elastischen Kunststoff umgeben ist, wobei der Kunststoff in den seitlichen Zwischenraum zwischen Tastenkörper und Tastenrahmen eingespritzt ist.

Um eine gegenüber Abnutzung besonders stabile Kennzeichnung der Taste zu erhalten, ist der Tastenkörper von einer transparenten Folie umgeben, auf welcher auf der dem Benutzer abgewandten Seite Markierungen aufgebracht sind. Es erzeugt in diesem Fall der elastische Kunststoff eine fluiddichte Verbindung zwischen dem mit Folie umgebenen Tastenkörper und dem Tastenrahmen.

In besonders vorteilhafter Weise ist der mit Folie umgebene Tastenkörper durch den Kunststoff elastisch an der Sollposition für dessen beabsichtige Betätigung gehalten und es werden beim Auftreten von Auslenkungen gegenüber der Sollposition definierte elastische Rückstellkräfte bereitgestellt, so daß auf weitere Federn oder Führungs- bzw. Halteeinrichtungen für den Tastenkörper vollständig verzichtet werden kann.

Hierbei ist durch die Wahl der Elastizität des Kunststoffs, dessen Dicke sowie Gestaltung des Querschnitts die Einstellung der erwünschten auslenkungsabhängigen Rückstellkräfte möglich.

Eine mechanisch besonders zuverlässige und gegenüber Ablösung widerstandsfähige Ausführungsform ergibt sich, wenn der elastische Kunststoff den mit Folie umgebenen Tastenkörper an dessen Außenumfang entlang der gesamten peripheren Seitenfläche umgibt und im Fußbereich des Tastenkörpers eine seitliche Auskragung der Folie mitübergreift. Zu diesem Zwecke ist es ferner sehr vorteilhaft, wenn der elastische Kunststoff einen Teil des oberen seitlichen Randes des Tastenkörpers mit übergreift. Auf den elastischen Kunststoff aufgebrachte Druckkräfte werden dann direkt in den Tastenkörper weitergeleitet, ohne daß es hierbei zur Spaltbildung oder zu Ablösungstendenzen kommen kann.

Mit einer nach vorn hervortretenden Auswölbung kann durch den elastischen Kunststoff eine Führungsfunktion für den Bediener erreicht werden, welche selbst bei leichter Fehlbetätigung eine zentrierende und korrigierende Wirkung aufweist.

Es ist ferner vorteilhaft möglich, mit dem elastischen Kunststoff auf dem mit Folie umgebenen Tastenkörper taktil wahrnehmbare Markierungen aufzubringen, wie beispielsweise Zeichen in Blindenschrift, die bei transparentem elastischem Kunststoff die optische Wahrnehmung nicht stören, aber Blinden die Betätigung erleichtern.

Bei einer weiteren besonders bevorzugten Ausführungsform ist das Tastenfeld Teil einer Gehäuse-Halbschale, insbesondere des Gehäuses eines Mobiltelefons, eines Satelliten-Navigationsempfängers oder eines Lap- bzw. Palmtops und bildet mit der weiteren Gehäuse-Halbschale oder den weiteren Gehäusebauteilen eine fluiddichte Einheit.

Die lichtdurchlässige Ausführung des elastischen Kunststoffs gestattet es auch, Ausführungsformen bereitzustellen, die bei Dunkelheit sicher und zuverlässig zu bedienen sind, da bei Hinterleuchtung des Tastenfeldes eine erhellte Umrahmung für den Tastenkörper sichtbar wird.

Wird der elastische Kunststoff in Ausnehmungen der Gehäuse-Halbschale eingespritzt, so können im Falle von Durchgangsöffnungen, die mit dem elastischen Kunststoff verfüllt werden, bei Hinterleuchtung erhellte optische Bereiche ausgebildet werden, welche beispielsweise den Benutzer über Tastenfunktionen oder den Betätigungsszustand der Taste informieren.

Die Erfindung wird nachfolgend anhand bevorzugter Ausführungsformen und unter Bezugnahme auf die beigefügten Zeichnungen detaillierter beschrieben.
Es zeigen:
- Fig. 1a und b: zwei Querschnittsdarstellungen, welche sich senkrecht zur Oberfläche des Tastenrahmens eines erfindungsgemäßen Tastenfeldes erstrecken, die erste entlang der Richtung AA' aus Fig. 3 und die zweite entlang der Richtung BB' aus Fig. 3 verlaufend,
- Fig. 2: eine der in Fig. 1 gezeigten Querschnittsdarstellung entsprechende Querschnittsansicht einer herkömmlichen Tastatur,
- Fig. 3: eine perspektivische Ansicht eines Ausschnitts des erfindungsgemäßen Tastenfeldes schräg von oben,

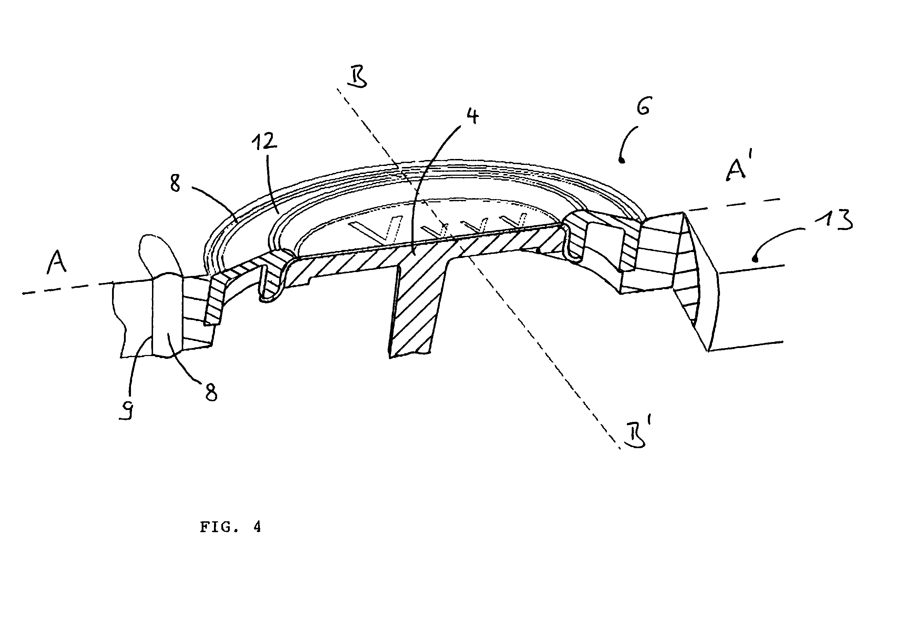

- Fig. 4: eine perspektivische, aufgebrochene Darstellung eines Tastenfeldes, bei welchem der Tastenrahmen Teil einer Gehäuse-Halbschale ist,
- Fig. 5: eine perspektivische Querschnittsdarstellung, welche im wesentlichen der ersten Darstellung in Fig. 1 entspricht, jedoch eine andere Form des eingespritzten elastischen Kunststoffs aufweist.

Bei der nachfolgend detaillierteren Beschreibung sei darauf hingewiesen, daß weder die Figuren maßstabsgerecht sind noch die erfindungsgemäßen Ausführungsfomen auf die jeweils dargestellten Tastenformen, -markierungen sowie -anordnungen relativ zueinander beschränkt sind.

Ferner umfaßt für die spätere Beschreibung der Ausdruck Tastenfeld auch Tastenfelder mit jeweils nur einer Taste, wie beispielsweise die Einschalttaste bei einem GSM-Telefon und es soll der Begriff "elastischer Kunststoff" übliche Thermoplaste, wie diese beispielsweise bei der Herstellung von Gehäusen für elektrische oder elektronische Geräte verwendet werden, umfassen, wobei eine besonders bevorzugte Ausführungsform ein PC-ABS-Compound bestehend aus einem Polykarbonat-Acrylbutardinstyrol verwendet.

Der Begriff elastischer oder relativ elastischer Kunststoff soll ein thermoplastisches Elastomer, TPE, wie es beispielsweise bei der Herstellung von Dichtungen oder elastischen Formteilen verwendet wird, umfassen. Eine besonders bevorzugte Ausführungsform verwendet als thermoplastisches Elastomer beispielsweise thermoplastisches Polyuräthan, TPU.

Bei der nachfolgenden Beschreibung wird zunächst die Herstellung eines Tastenfeldes eines Mobil- oder GSM-Telefons beschrieben, welches im Ganzen mit dem Bezugszeichen 1 versehen ist.

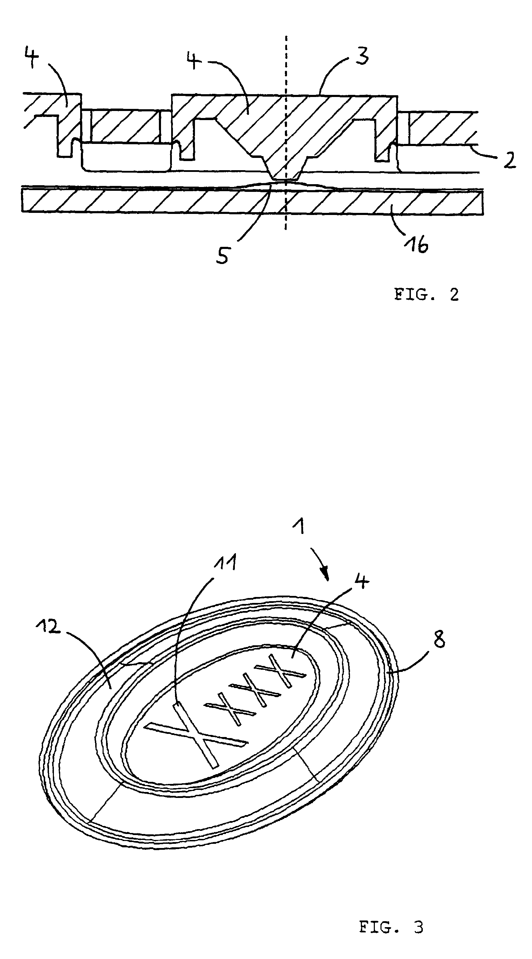

Unter Bezugnahme auf Fig. 2 wird zunächst ein herkömmliches Verfahren zur Herstellung eines Tastenfeldes beschrieben, wie dies beispielsweise in etwas abgewandelter Form aus der EP 0 737 992 A1 bekannt ist.

Es wird zunächst eine unter Druck oder thermisch verformbare Folie 2, wie beispielsweise eine Polykarbonatfolie von deren Rückseite her mit einer spiegelbildlichen Darstellung der später auf dem Tastenfeld erkennbaren Markierung bedruckt und es werden danach topfförmige Einsenkungen 3 in die Folie eingebracht, deren Boden von der Bedrucküngsseite aus gesehen eine spiegelbildliche Darstellung der benutzerseitig erkennbaren Markierung trägt. Das Einbringen dieser Einsenkung kann durch Druckverformung, Tiefziehen bzw. thermisches Umformen der Folie 2 erfolgen, wobei gleichzeitig vorzugsweise sämtliche Einsenkungen für das spätere Tastenfeld 1 in einem einzigen Arbeitsschritt hergestellt werden.

Danach werden in die Einsenkungen 3 die Tastenkörper 4 eingebracht, vorzugsweise durch Spritzgießen eines glasklaren Thermoplastes, wie z.B. eines Polykarbonats. Es liegt ferner im Rahmen der Erfindung, vor dem Spritzgießen des Tastenkörpers 4 eine Lackierung der bedruckten Folie 2 auf deren Innenseite, beispielsweise zum Schutz, mit einem Klarlack oder einem milchigen Lack zur Erzeugung einer erwünschten diffusen Lichtstreuung aufzubringen.

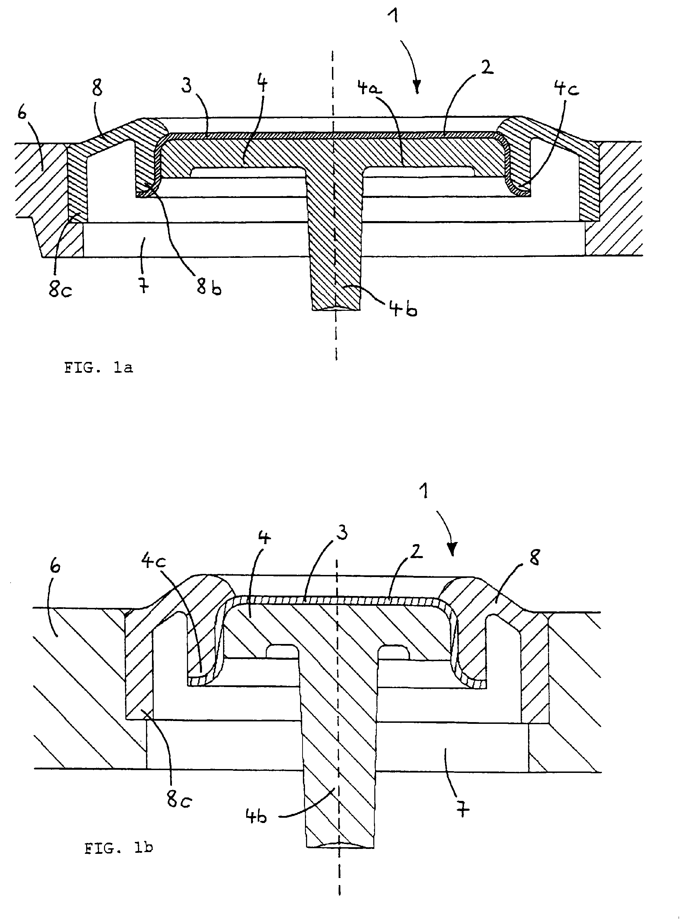

Der Tastenkörper 4 umfaßt einen im wesentlichen ebenen Bodenbereich 4a, sowie einen einstückig mit diesem während des Spritzgußvorgangs ausgebildeten, nach unten vortretenden Stempel 4b, welcher zur Betätigung eines elektrischen oder elektronischen Schaltelementes 5 dient und axial, d.h. in Richtung des Pfeils C aus Fig. 1 verschoben werden kann.

In erfindungsgemäßer Weise werden nach diesem Bearbeitungsschritt die in der Folie 2 gehaltenen Tastenkörper 4 derart vereinzelt, daß die Folie entlang eines Randbereiches des Tastenkörpers 4 abgetrennt, vorzugsweise ausgestanzt wird, und daß sich eine seitliche, den Tastenkörper 4 radial erweiternde Auskragung 4c ergibt.

Nachfolgend werden die Tastenkörper 4 in jeweils der speziellen Taste zugeordnete Öffnungen 7 des Tastenrahmens 6 so eingesetzt, daß diese in etwa ihre spätere Sollposition für die nicht betätigte Stellung einnehmen. Danach wird der elastische Kunststoff 8 derart eingespritzt, daß dieser den Tastenkörper 4 an dessen peripherer Außenseite sowie im Fußbereich die seitliche Auskragung 4c übergreifend angeformt wird.

Ferner wird der elastische Kunststoff 8 derart eingespritzt, daß er einen oberen Abschnitt der Innenseite der Öffnung 7 vollflächig übergreift und hierdurch sowohl eine fluiddichte Verbindung zum Tastenrahmen 6 als auch zum Tastenkörper 4 bzw. der Folie 2 hergestellt wird.

Durch die Wahl der Härte bzw. Steifigkeit des elastischen Kunststoffs 8 können die Rückstellkräfte bei Auslenkung des Tastenkörpers 4 in Richtung des Pfeils C sowie senkrecht hierzu auftretende Rückstellkräfte wunschgemäß eingestellt werden.

Ferner können gleichzeitig mit dem Umspritzen des Tastenkörpers 4 im Tastenrahmen 6 angeordnete Öffnungen 9 mit dem elastischen Kunststoff 8 ausgespritzt werden. Durch derartige mit elastischem Kunststoff ausgefüllte Öffnungen 9 können entweder nach oben hervortretende taktile Markierungen im Tastenrahmen 6 erzeugt werden oder es können im Falle von Durchgangsöffnungen diese fluiddicht verschlossen werden und i bei Wahl eines transparenten Kunststoffs bei dessen Hinterleuchtung erhellte Markierungen sichtbar werden, wie beispielsweise hinterleuchtete Tastenmarkierungen oder Angaben über Funktionszustände eines elektrischen oder elektronischen Geräts. Derartige Markierungen werden nur bei Hinterleuchtung wahrnehmbar und bleiben ansonsten bei Beleuchtung von vorn unsichtbar, so daß hierdurch dem Benutzer zusätzlich zur Tastenmarkierung weitere Informationen anzeigbar sind. Vereinfacht dargestellt kann hier der transparente Kunststoff die Funktion eines Lichtleiters oder einer auch als Light Pipe bezeichnete Lichtführung übernehmen.

Ferner können auch auf der Oberseite des Tastenkörpers 4 mittels des elastischen Kunststoffs taktil wahrnehmbare Markierungen 10, beispielsweise transparent ausgebildet, in Form von Blindenschrift lesbare Markierungen angeformt werden.

Besonders vorteilhaft ist diese Art der Herstellung, da in einem einzigen Spritzgieß-Verfahrensschritt nahezu sämtliche aus elastischem Kunststoff 8 bestehenden Formteile, wie beispielsweise Griffleisten oder auch Abdichtungen zu elektrischen Verbindern hergestellt werden können. Derartige Verbinder können Verbinder für die Stromversorgung, die Antenne oder den Datenaustausch sein. Auf die gleiche Weise können Sichtfenster aus transparentem Material fluiddicht in der Gehäuse-Halbschale fluiddicht befestigt werden.

Nachfolgend wird auf Fig. 3 Bezug genommen, welcher eine Darstellung des Tastenfeldes 1 zu entnehmen ist, bei welcher der elastische Kunststoff 8 die gleiche Farbe wie der Tastenrahmen 6 aufweist und nur die optische Markierung 11 für den Benutzer kontrastreich sichtbar wird. Der Tastenkörper 4 ist dabei derart vom elastischen Kunststoff 8 umgeben, daß eine nach vorn, über die Vorderseite des Tastenkörpers 4 bzw. der Folie 2 hervortretende ringförmige Auswölbung 12 gebildet wird, die bei Betätigung der Taste eine zentrierende Wirkung ausübt.

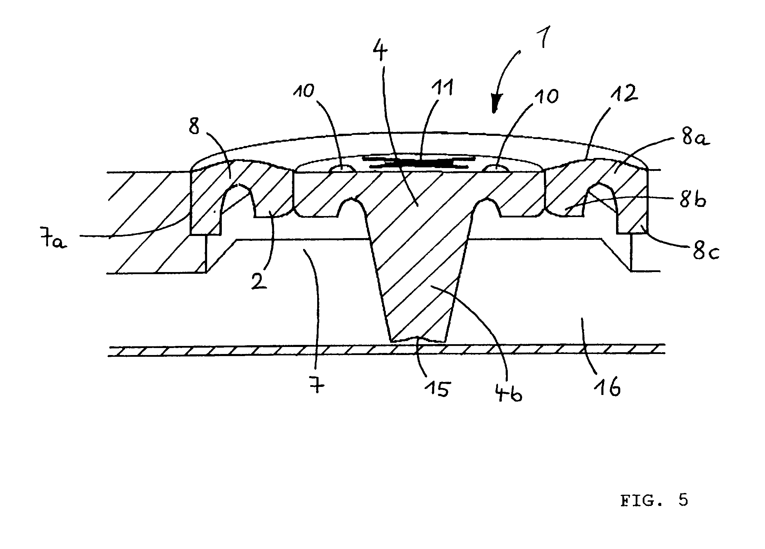

Ebenfalls Ton in Ton oder farblich kontrastreich abgesetzt sind Griffelemente 13 an den Seitenflächen der Gehäuse-Halbschale 14, die beispielsweise bei einem schnurlosen Telefon oder einem GSM-Telefon einstückig mit dem Tastenrahmen 6 verbunden ist, angespritzt. Zur Verdeutlichung der vielfältigen Einsatzmöglichkeiten der Erfindung, beispielsweise für Betätigungseinrichtungen, welche hohe Rückstellkräfte benötigen, sei auf Fig. 5 verwiesen, bei welcher der elastische Kunststoff 8 ein besonders dick ausgebildetes Schulterteil 8a umfaßt, welches den Kunststoffabschnitt 8b an der peripheren Seitenwand des Tastenkörpers 4 bzw. der Folie 2 umgibt, mit dem Kunststoffabschnitt 8c verbindet, welcher an der Innenwand einer radialen Erweiterung 7a der Öffnung 7 angeordnet ist. Durch die radiale Erweiterung 7a der Öffnung 7 werden Abschälmomente des Kunststoffs 8 bei Betätigung des Tastenkörpers 4 in Richtung des Pfeils C vermieden und kann die in Anlage mit dem elastischen Kunststoff 8 befindliche Oberfläche der Öffnung 7 erweitert werden.

Gegenüber der Darstellung in Fig. 5 werden bei der in Fig. 1 gezeigten Ausführungsform wunschgemäß geringere Rückstellkräfte entwickelt, da das elastische Schulterteil 8a sehr viel dünner ausgebildet ist.

Ferner ist die Erfindung nicht auf bestimmte Schaltelemente 5 beschränkt sondern kann vielfältig für elektrische oder elektronische Schalter, beispielsweise Mikroschalter, metallische Kontaktfahnen, metallische Knackfrösche oder die als Metaldome bzw. Polydome bezeichneten Schnappscheiben angewendet werden, wobei die Tiefe der axialen Verschiebung des Tastenkörpers 4 in Richtung des Pfeils C durch entsprechend große Wahl des Schulterteils 8a in weiten Bereichen einstellbar ist. Es liegt ferner im Rahmen der Erfindung, mit am Stempel 4b des Tastenkörpers 4 angebrachten magnetischen Elementen Reed-Relais zu schalten oder mit einer leitfähigen Beschichtung 15 auf der unteren Bodenfläche des Stempels 4b auf der Leiterplatte 16 aufgedruckte Leitbahnen kurzuschließen bzw. elektrisch leitfähig zu verbinden.

Anstelle rein digitaler Schaltvorgänge, wie Ein- und Ausschaltvorgänge, lassen sich durch die elastische Aufhängung des Tastenkörpers 4 auch analoge Signale erschütterungsfrei erzeugen. Sehr vorteilhaft ist dabei, daß keinerlei weiteren Halte- oder Führungseinrichtungen nötig sind, welche u.U. Haft- oder Gleitreibungskräfte erzeugen, und ein Verkanten oder ruckweises Verschieben nahezu vollständig ausgeschlossen ist. Wenn beispielsweise der Stempel 4b des Tastenkörpers 4 auf eine in den Figuren nicht dargestellte Piezofolie gepreßt wird und deren Spannungssignale erfaßt werden oder falls ein opak ausgebildeter Stempel 4b durch das Eintauchen in eine Optokoppler-Gabellichtschranke den Lichtweg proportional zu seiner Verschiebung in Richtung des Pfeiles C blockiert, können analoge Spannungs- oder Stromsignale gewonnen werden, die eine sehr exakte Darstellung der aufgebrachten Kräfte wiedergeben. Derartige Schaltvorgänge können beispielsweise durch elektronische Schwellenwertbildung mehrere Schaltpositionen umfassen, wie beispielsweise zur Auslösung elektronischer Kameras in einer ersten Stufe die Belichtungsmessung, in einer zweiten Stufe das Fokussieren und in einer dritten Stufe das Auslösen des Aufnahmevorgangs.

Es liegt ferner im Rahmen der Erfindung, den Tastenkörper 4 vollständig mit dem elastischen Kunststoff zu überziehen, um auf diese Weise eine im wesentlichen geschlossene Oberfläche des Tastenfeldes 1 zu erzeugen. Bei derartigen Ausführungsformen kann, beispielsweise für die Lautstärke-Einstelltasten eines GSM-Telefons, durch Wahl eines Kunststoffs, der die gleiche Farbe wie das Gehäuse hat, ein Tastenfeld bereitgestellt werden, bei dem die Tasten kaum sichtbar aber taktil sehr gut wahrnehmbar sind.

## Patentansprüche

1. Tastenfeld für ein elektrisches oder elektronisches Gerät umfassend
einen Tastenkörper (4), der innerhalb eines Tastenrahmens (6) gehalten ist,
bei welchem der Tastenrahmen (6) und der Tastenkörper (4) aus einem relativ steifen Kunststoff bestehen und welches
dadurch gekennzeichnet ist, daß der Tastenkörper (4) seitlich mit einem elastischen Kunststoff (8) umgeben ist, welcher in den seitlichen Zwischenraum zwischen Tastenkörper (4) und Tastenrahmen (6) eingespritzt ist.

2. Tastenfeld nach Anspruch 1, dadurch gekennzeichnet, daß der Tastenkörper (4) von einer transparenten Folie (2) umgeben ist, auf welcher auf der dem Benutzer abgewandten Seite Markierungen (11) aufgebracht sind, und bei welchem der elastische Kunststoff (8) eine fluiddichte Verbindung zwischen dem mit Folie (2) umgebenen Tastenkörper (4) und dem Tastenrahmen (6) bildet.

3. Tastenfeld nach Anspruch 1 oder 2, dadurch gekennzeichnet, daß der mit Folie (2) umgebene Tastenkörper (4) durch den Kunststoff (8) elastisch an dessen Sollposition gehalten ist und beim Auftreten von Auslenkungen gegenüber der Sollposition elastische Rückstellkräfte bereitstellt.

4. Tastenfeld nach Anspruch 1, 2 oder 3, dadurch gekennzeichnet, daß der elastische Kunststoff (8) den Tastenkörper (4) oder den mit Folie (2) umgebene Tastenkörper (4) an dessen Außenumfang entlang der gesamten peripheren Seitenfläche umgibt und im Fußbereich des Tastenkörpers (4) eine seitliche Auskragung der Folie (2) mit übergreift.

5. Tastenfeld nach einem der vorstehenden Ansprüche, dadurch gekennzeichnet, daß der elastische Kunststoff (8) eine nach vorn hervortretende Auswölbung (12) aufweist, welche einen Randbereich der Vorderseite des Tastenkörpers (4) oder der Folie (2) übergreift.

6. Tastenfeld nach einem der vorstehenden Ansprüche, dadurch gekennzeichnet, daß mittels des elastischen Kunststoffs (8) auf dem mit Folie (2) umgebenen Tastenkörper (4) taktil wahrnehmbare Markierungen (10) aufgebracht sind.

7. Tastenfeld nach einem der vorstehenden Ansprüche, dadurch gekennzeichnet, daß das Tastenfeld (6) Teil einer Gehäuse-Halbschale (14) ist.

8. Tastenfeld nach einem der vorstehenden Ansprüche, dadurch gekennzeichnet, daß der elastische Kunststoff (8) lichtdurchlässig ist und bei Hinterleuchtung des Tastenfeldes (6) eine erhellte Umrahmung für den Tastenkörper (4) bildet.

9. Tastenfeld nach einem der vorstehenden Ansprüche, dadurch gekennzeichnet, daß der elastische Kunststoff (8) in Ausnehmungen (9) der Gehäuse-Halbschale (14) eingespritzt ist und sowohl taktil als auch optisch wahrnehmbare Markierungen ausbildet, welche bei Hinterleuchtung erhellte optische Bereiche ausbilden.

10. Tastenfeld nach Anspruch 9, dadurch gekennzeichnet, daß mittels des elastischen Kunststoffs (8) elastische Griffbereiche (13) an der Gehäuse-Halbschale (14) ausgebildet sind und/oder andere Baugruppen fluiddicht an der Gehäuse-Halbschale (14) gehalten sind, die aus der Gruppe ausgewählt sind, die elektrische Verbinder, Sichtfenster aus transparentem Material und Antennen umfasst.

11. Verfahren zur Herstellung eines Tastenfeldes (1), umfassend
das Bedrucken einer transparenten Folie (2) auf der dem Benutzer abgewandten Seite,
das Tiefziehen oder Prägen der Folie (2),
das Anbringen oder Anformen von Tastenkörpern (4) innerhalb des tiefgezogenen Bereichs oder des eingeprägten Bereichs der Folie,
welches dadurch gekennzeichnet ist, daß
die mit Folie (2) umgebenen Tastenkörper aus der Folie vereinzelt und
mit einem elastischen Kunststoff (8) umspritzt werden.

12. Verfahren nach Anspruch 11, dadurch gekennzeichnet, daß die mit Folie (2) umgebenen, vereinzelten Tastenkörper (4) vor dem Umspritzen in einen Tastenrahmen (6) eingesetzt werden und bei dem Umspritzen sowohl eine Verbindung zu den mit Folie (2) umgebenen Tastenkörpern (4) als auch zu dem Tastenrahmen (6) hergestellt wird.

13. Verfahren nach Anspruch 11 oder 12, dadurch gekennzeichnet, daß bei dem Umspritzen ein gegenüber dem mit Folie (2) umgebenen Tastenkörper (4) benutzerseitig hervortretender, die Taste umgebender Bereich geformt wird.

14. Verfahren nach Anspruch 11, 12 oder 13, dadurch gekennzeichnet, daß der Vorgang des Vereinzelns das Ausstanzen der Tastenkörper (4) aus der Folie (2) derart umfaßt, daß die Folie (2) eine verbleibende seitliche Auskragung (4c) bildet.

15. Verfahren nach einem der vorstehenden Ansprüche, dadurch gekennzeichnet, daß beim Umspritzen eine vollflächige Umschließung der peripheren Seitenfläche des Tastenkörpers (4) oder der Folie (2) und eine Überdeckung der seitlichen Innenfläche des Tastenrahmens (6) erzielt wird.

16. Verfahren nach einem der vorstehenden Ansprüche, dadurch gekennzeichnet, daß der Tastenrahmen (6) Teil einer Gehäuse-Halbschale (14) eines Gerätes mit Tastenfeld (1) ist und bei dem Umspritzen des Tastenkörpers (4) mittels des elastischen Kunststoffs (8) Griffelemente (13) an der Gehäuse-Halbschale (14) ausgebildet werden.

17. Verfahren nach einem der vorstehenden Ansprüche, dadurch gekennzeichnet, daß beim Umspritzen mit dem elastischen Kunststoff (8) auf der Vorderseite des mit Folie umgebenen Tastenkörpers (4) taktil wahrnehmbare Markierungen (10) aufgebracht werden.

18. Verfahren nach einem der vorstehenden Ansprüche, dadurch gekennzeichnet, daß beim Umspritzten mit dem elastischen Kunststoff (8) auf der Gehäuse-Halbschale (14) taktil wahrnehmbare Markierungen aufgebracht werden.

19. Verfahren nach einem der vorstehenden Ansprüche, dadurch gekennzeichnet, daß beim Umspritzen mit dem elastischen Kunststoff (8) in der Gehäuse-Halbschale (14) angebrachte Durchgangsöffnungen (9) mit dem elastischen Kunststoff (8) ausgespritzt werden.

20. Verfahren nach einem der vorstehenden Ansprüche, dadurch gekennzeichnet, daß in der Gehäuse-Halbschale (14) angebrachte Durchgangsöffnungen, in welchen elektrische Verbinder angeordnet sind, durch den elastischen Kunststoff (8) derart verschlossen werden, daß eine formschlüssige fluiddichte Verbindung zwischen dem Verbindergehäuse und der Gehäuse-Halbschale (14) hergestellt wird.
